# EUROPÄISCHE PATENTSCHRIFT

(11) **EP 0 678 854 B1**
(45) Veröffentlichungstag und Bekanntmachung des Hinweises auf die Patenterteilung: **28.11.2001**
(21) Anmeldenummer: 95105722.3
(22) Anmeldetag: 18.04.1995
(51) Int. Cl.: G11B 5/008, G11B 15/18

(54) **Verfahren zur Aufzeichnung eines digitalen Signals**
Method for recording a digital signal
Méthode d'enregistrement d'un signal numérique

(30) Priorität: 22.04.1994 DE 4414147; 22.07.1994 DE 4426033; 20.09.1994 DE 4433312
(43) Veröffentlichungstag der Anmeldung: 25.10.1995
(73) Patentinhaber: DEUTSCHE THOMSON-BRANDT GMBH, 78048 Villingen-Schwenningen (DE)
(72) Erfinder: Kaaden, Jürgen, D-78052 Villingen-Schwenningen (DE); Oldermann, Klaus, D-78052 Villingen-Schwenningen (DE)

(56) Entgegenhaltungen:
- EP-A- 0 229 732
- EP-A- 0 306 964
- EP-A- 0 337 650
- EP-A- 0 465 159
- NL-A- 8 701 602
- US-A- 4 424 541
- US-A- 4 558 380
- US-A- 5 276 557
- PATENT ABSTRACTS OF JAPAN vol. 010, no. 026 (P-425), 31.Januar 1986 & JP-A-60 177402 (SONY KK), 11.September 1985,
- COMPUTER TECHNOLOGY REVIEW, Nr. 4, September 1985, LOS ANGELES, CA, USA, Seite 107+110+112+114 XP002005971 S. HENRY ET AL.: "The PC/T Tape Format Makes Data Backup Easier, More Reliable"
- PATENT ABSTRACTS OF JAPAN vol. 018, no. 278 (P-1743), 26.Mai 1994 & JP-A-06 044505 (MITSUBISHI ELECTRIC CORP), 18.Februar 1994,
- PATENT ABSTRACTS OF JAPAN vol. 010, no. 338 (P-516), 15.November 1986 & JP-A-61 139906 (MATSUSHITA ELECTRIC IND CO LTD), 27.Juni 1986,
- PATENT ABSTRACTS OF JAPAN vol. 010, no. 305 (P-507), 17.Oktober 1986 & JP-A-61 117767 (MITSUBISHI ELECTRIC CORP), 5.Juni 1986,

## Beschreibung

Die Erfindung geht aus von einem Aufzeichnungsverfahren gemäß dem Oberbegriff des Anspruchs 1.

Es ist bekannt, daß bei digitalen Videomagnetbandaufzeichnungssystemen DVC (Digital Video Cassette) eine hohe Datenrate (25-50Mbps) bei gleichzeitig langer Spielzeit auftritt. MPEG (Motion Picture Expert Group) weist ein sehr komplexes Datenreduktionssystem mit Bewegungsschätzung, Interpolation und bidirektionaler Prädiktion auf. Großer Aufwand entsteht im Encoder, in dem diese Rechenoperationen aus dem Quellenmaterial zu erstellen sind. Der Decoder erhält die inversen Rechenanweisungen, übermittelt und rekonstruiert daraus das Bild. Dieses Kodierungsverfahren ist sehr effektiv, jedoch unausgewogen (großer Aufwand im Enkoder und geringe Komplexität im Dekoder), so daß sein Einsatz vorwiegend im Bereich der Übertragungssyteme für digitales Bildmaterial erfolgen wird, z.B. digitales Fernsehen mit Datenraten zwischen 2..8 Mbps für SDTV und 6...24 Mbps für HDTV. Hierbei wird für jedes zu übertragende Programm ein komplexer Enkoder im Studio benötigt, und einfache Dekoder werten den ankommenden Datenstrom beim Nutzer aus.

Da auch diese Signale aufgezeichnet werden sollen und dies sehr effektiv in der datenreduzierten Ebene digital erfolgen kann, kommen im Moment nur digitale Magnetbandaufzeichnungsgeräte nach dem DVC System in Frage, die bei ausreichender Spielzeit noch die entsprechende Datenrate verarbeiten können. Der MPEG Datenstrom wird dabei transparent, also unverändert aufgezeichnet und bei der Wiedergabe ebenso abgegeben, so daß der Dekoder keinen Unterschied zwischen übertragenen und aufgezeichneten Daten sieht.

Ein Aufzeichnungsgerät erwartet einen kontinuierlichen Aufzeichnungsdatenstrom von z.B. 25 Mbps, jedoch steht nur ein kontinuierlicher / variabler Datenstrom von z.B. 8 Mbps (SDTV) zur Verfügung. Es ist eine Anpassung der Aufzeichnungsdatenrate notwendig. Dabei soll der zur Verfügung stehende Überschuß nicht verloren gehen, sondern zur Spielzeitverlängerung genutzt werden.

EP-A-0 306 964 offenbart ein Verfahren zur Aufzeichnung eines digitalen Signales gemäß den Merkmalen des Oberbegriffs des Anspruchs 1.

Der Erfindung liegt die Aufgabe zugrunde, ein Aufzeichnungsverfahren zu schaffen, mit dem die vorhandene Speicherkapazität eines Magnetbandes besser ausgenutzt werden kann. Diese Aufgabe wird durch die im Anspruch 1 angegebenen Merkmale der Erfindung gelöst. Anspruch 4 gibt einem Recorder an gemäß der Erfindung. Vorteilhafte Weiterbildungen der Erfindung sind in den Unteransprüchen angegeben.

Das erfindungsgemäße Aufzeichnungsverfahren kann für DVC Geräte mit einer Spielzeitverlängerung verwendet werden, wobei eine konstante Bandvorschubgeschwindigkeit mit teilsegmentierter Schrägspuraufzeichnung sowie einen Zweirichtungsaufzeichnungsbetrieb bei Aufzeichnung und Wiedergabe vorgesehen ist.

Bei dem erfindungsgemäßen Verfahren kann durch Beschreiben nur eines Teilbereiches der Schrägspur (z.B. 1/4), eines sog. Segmentes dieses erreicht werden. Der Rest der Spur (z.B. 3/4) bleibt zunächst leer oder wird mit nicht relevanten Daten beschrieben. Bei mehreren aufeinanderfolgenden Durchläufen werden immer weitere Bereiche der Spur beschrieben, bis letztlich die Gesamtspur komplett aufgezeichnet ist.

Bei bekannten Verfahren liegt zwischen den Segmentschreibvorgängen eine Phase des Bandrückspulens, in der für ca 4 Minuten (abhängig von Transportgeschwindikeit und Bandlänge) keine Aufzeichnung stattfindet, sofern nicht ein Speicher diese Datenmenge aufnimmt. Bei einer Eingangsdatenrate von 8 Mbps und 4 Minuten Dauer müßte der Speicher eine Größe von 1920 Mbit haben. Ein solcher Speicher ist zu teuer für Consumergeräte.

Das erfindungsgemäße Schrägspurmagnetbandaufzeichnungsgerät kann einen Zweirichtungsaufzeichnungs- und Wiedergabebetrieb aufweisen, wobei die Bandvorschubgeschwindigkeit, in beiden Richtungen und bei beiden Betriebsarten identischein kann. Das Prinzip der segmentierten Aufzeichnung wird angewendet. Wenn in Vorwärtstransportrichtung das 1. Segment aufgezeichnet worden ist und das Bandende erreicht wird, ändert sich die Bandlaufrichtung, und das 2. Segment wird mit verändertem Spurwinkel im Anschluß an Segment 1 angefügt. Die durch die Spurwinkeldifferenz auftretenden Versätze der Spursegmente zueinander werden durch entsprechend große Segmentlücken aufgefangen. Zum Auspuffern der Reaktionszeit des Laufwerkes bei Richtungswechsel an den Bandenden ist ein Speicher vorhanden, der die Daten für z.B. 2 s aufnimmt.

Die Gesamtaufzeichnung besteht aus einer Aneinanderreihung einzelner segmentierter Einzelaufzeichnungen, die sich teilweise in ihrem Spurwinkel unterscheiden. Zwischen der Aufzeichnung der Einzelsegmente wird die Bandlaufrichtung umgeschaltet. Während der Umschaltvorgänge werden die Daten zwischengespeichert. Die Segmentlänge ist abhängig vom Verhältnis der Eingangsdatenrate zur Aufzeichnungsdatenrate.

Segmente, die in gleicher Bandlaufrichtung geschrieben wurden, können simultan bei einem Wiedergabedurchlauf gelesen werden. Die Spurhaltungsinformation wird nur aus einem Segment gewonnen. Bei der Aufzeichnung wird der nach einem Umschaltvorgang gefüllte Speicher bis zum nächsten Bandrichtungsumschaltvorgang geleert. Bei der Wiedergabe wird der Speicher immer aufgefüllt gehalten, um bei Richtungswechsel Daten aus dem Speicher bereitstellen zu können.

Die maximale Aufzeichnungsdatenrate ist im Mittel geringfügig höher als die Eingangsdatenrate. Die Wiedergabedatenrate entspricht der Eingangsdatenrate bei der Aufzeichnung. Die Dateninhalte eines einzelnen Segmentes entsprechen der Audio- bzw Videoinformation eines Programmes.

Am Ende des Bandes wird das Laufwerk auf die inverse Bandtransportrichtung umgeschaltet und der Einsatz- sowie Abschaltzeitpunkt des Aufnahmeverstärkers so angepaßt, daß ein an das vorher geschriebene Segment anschließendes Spursegment mit einem anderen Spurwinkel geschrieben wird.

Die Erfindung wird im folgenden anhand der Zeichnung erläutert. Darin zeigen
- Fig. 1,2: die segmentierte Schrägspuraufzeichnung des Bandes,
- Fig. 3: die Kopftrommel,
- Fig. 4: die Signalverläufe,
- Fig. 5- 7: konstruktive Ausbildungen für den Bandbetrieb und
- Fig. 8 - 9: Weiterbildungen der Erfindung.

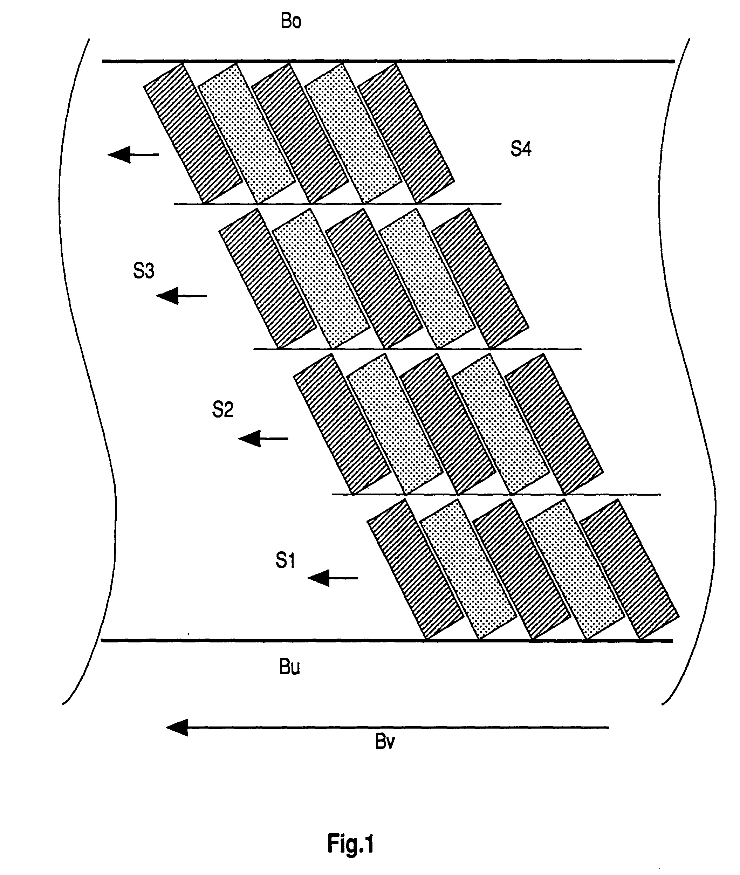

In Fig. 1 ist zur Verdeutlichung die segmentierte Schrägspuraufzeichnung für 4 Segmente S1 - S4 von Bandunter Bu- bis Bandoberkante Bo dargestellt. Unterschiedliche Schraffuren kennzeichnen die Azimutwinkel der im Normalfall alternierend (wie dargestellt) oder in Spezialversionen gleichzeitig schreibenden Köpfe. Durch diesen Winkelversatz werden Nachbarspurinformationen beim Lesen wirksam entkoppelt. Es wird nur in einer Bandlaufrichtung Bv aufgezeichnet. Zwischen der Aufzeichnung der Einzelsegmente muß umgespult werden. Schreiblücken stellen eine Editierbarkeit der Einzelsegmente sicher, die z.B. im Überspielfall von Bedeutung sind. Solche Segmentaufzeichnungen werden im 8mm Videosystem, bei DAT und im neuen digitalen Videoformat DVC eingesetzt.

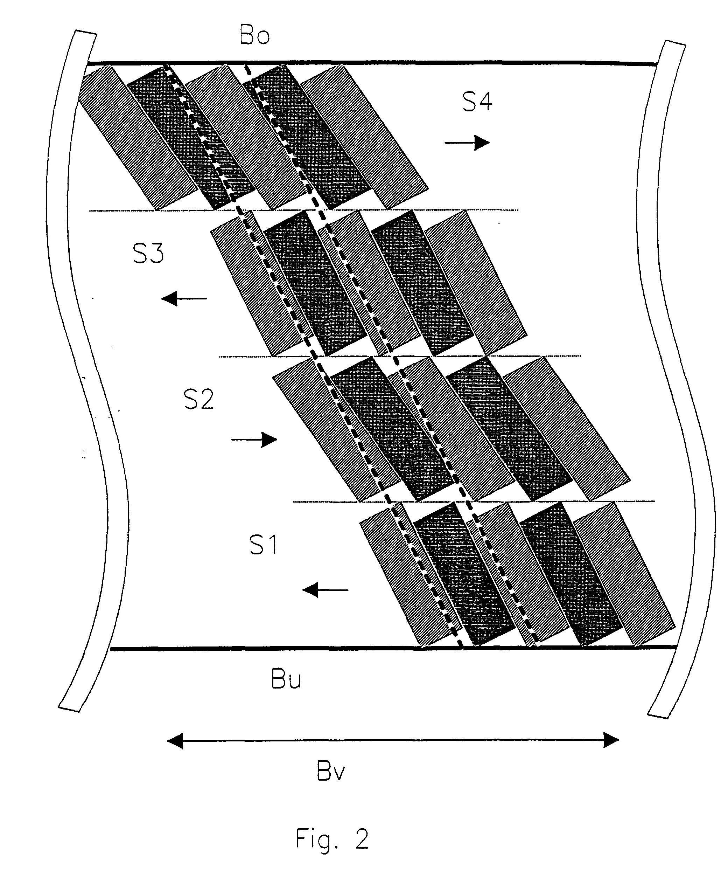

In Fig.2 ist die auftretende Umsetzung der Segmentposition im Zweirichtungsbetrieb dargestellt. Die Segmente S1 und S3 sind in einer Bandtransportrichtung Bv aufgezeichnet worden, die Segmente S2 und S4 in der anderen. Es kann jeweils eine Gruppe (S1,S3 bzw. S2, S4) in einem Durchlauf gelesen werden. Die Wiedergabedatenrate könnte im dargestellten Fall also doppelt so hoch sein wie die Aufzeichnungsdatenrate. Die Veränderung des Schreibspurwinkels ist deutlich zu erkennen. Sie ist bedingt durch die Schrägspuraufzeichnung. Die Lesbarkeit der Informationen unterschiedlicher Spurwinkel und damit erweiterte Funktionen (z.B. die Darstellung aller aufgezeichneten Programme) ist stark abhängig von der Segmentlänge und der Kopfbreite. Die Darstellung der gestrichelten Linien verdeutlicht die Lesegrenzen bei 10 µm geschriebener Spurbreite und 14 µm Kopfspurbreite. Um im Wiedergabebetrieb in einer Richtung die Informationen der anderen Richtung teilweise lesen zu können, wird ein definierter Phasenoffset bei der Aufzeichnung eingehalten. Als Referenz dienen ein oder mehrere bereits aufgezeichnete Segmente. Hierzu wird beim Einfügen eines neuen Segmentes zunächst das/die zuvor geschriebene/n Segment/e gelesen und das neue Segment entsprechend angefügt

Eine weitere Lösung ist das Anfügen von invers geschriebenen Segmenten mit variablem Phasenoffset, der automatisch entsteht, wenn keine Maßnahmen zur Phasensynchronisation vorgenommen werden. Diese Betriebsart erlaubt das nur teilweise Auslesen von Information, was jedoch für eine kurze Programmübersicht durchaus ausreichend ist.

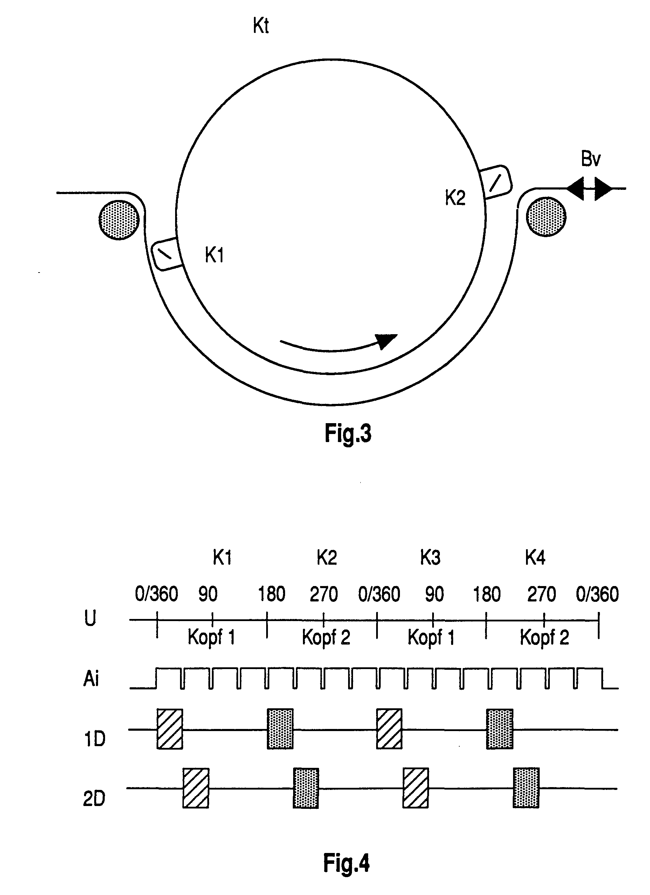

Fig.3 zeigt die Kopftrommel Kt mit zwei um 180° versetzten Köpfen K1, K2, die unterschiedliche Azimutwinkel aufweisen. Das Band B umschlingt die Kopftrommel und wird in beiden angegebenen Bandtransportrichtungen Bv bewegt.

In Fig. 4 sind die vom Umdrehungswinkel U (bei 0° taucht Kopf K1 in das Band ein) abhängigen und für die Segmentierung relevanten Signale dargestellt. Das Auftastsignal für die Segmentaufzeichnung wird aus einem mit der Kopftrommel phasenmäßig starr verkoppelten Signalgeber gewonnen. Es sind alle Auftastintervalle Ai für den Schreibverstärker dargestellt, welche vom Kopftrommelservo abgeleitet wurden. Pro Aufzeichnung wird nur eine eingeschränkte Anzahl davon durch eine Logik ausgewählt. Die das Band beschreibenden Signale sind für den 1. Durchlauf 1D bzw. 2. Durchlauf 2D dargestellt. Die Schraffuren entsprechen wieder den Darstellungen in Fig. 2.

Die Spurhaltungsinformation ist in den Daten abgelegt, so daß nach Schreiben eines Segmentes dieses beim Schreiben des nächsten Segmentes mit dem gleichen Spurwinkel als Referenz für die Spurhaltung benutzt wird.

Die Laufrichtungsumkehr des Bandtransportes Bv ist durch im System vorhandene Datenspeicherung für 2 s unkritisch und kann z.B. durch eine Wechselwirkung zwischen Bandantriebsmotor und Lademotor unter Vermeidung von Bandschlaufen durchgeführt werden. Solche Umschaltungen sind in handelsüblichen Schrägspuraufzeichnungsgeräten (VHS, 8mm) als Play im Übergang zu Review bekannt. Sie werden bei Bildsuchlauf eingesetzt.

Der Füllstand des im System befindlichen Datenspeichers wird bei der Aufzeichung so gesteuert, daß vor einem Richtungswechsel der Speicherinhalt minimal ist. Der hohe Füllstand nach dem Richtungswechsel wird abgebaut durch einen Redundanzbereich, der sich mit unterschiedlichen Segmentlängen oder konstanten Segmentlängen mit eingeschachtelten Dummydaten realisieren läßt. Beides ist möglich. Die Redundanzgröße ist vernachlässigbar, da sie sich an der kleinsten Kassette mit der größten Spielzeit orientiert, die man mit 1 h annehmen kann. Bei einer Eingangsdatenrate von 6 Mbps, d. h. einer gespeicherten Datenmenge von 12 Mbit ist eine Redundanz von 0.05% notwendig.

### Anwendungsmöglichkeiten:

Allgemein bei Schrägspurmagnetbandaufzeichnungsgeräten für digitale Daten, bei denen die Eingangsdatenrate niedriger ist als die Aufzeichnungsdatenrate, oder bei denen Datenströme in diskontinuierlicher Form vorliegen. Aufzeichnungsgeräte für MPEG Datenströme. Datenaufzeichnungsanwendungen wie Computerstreamer auf DAT, 8mm sowie DVC Basis.

Bei der Wiedergabe wird zunächst der Speicher aufgefüllt, dann beginnt der Auslesevorgang. Damit ist sichergestellt, daß bei einem auftretenden Richtungswechsel ein kontinuierlicher Datenstrom geliefert werden kann.

Eine Weiterbildung ist die vorteilhafte Ausführung eines DVC Gerätes mit einer Spielzeitverlängerung, die durch einen intermittierenden Betrieb ("Stop and Go") mit einer speziellen Vorrichtung in der Laufwerksmechanik zur Geräusch- und Abnutzungsminderung unter Verwendung des Bandvortriebsmotors für den Wickeltellerantrieb gekennzeichnet ist.

Vorteilhaft ist eine kostengünstige Lösung für eine Vielzahl von Überspielungen ohne das Laufwerk zu stark zu belasten. Der Geräuschpegel ist gering, und der Spurwinkel, die Bitlänge usw. ist konform zu den Spezifikationen des DVC Standards.

Das Magnetbandaufzeichnungsgerät arbeitet mit voller Aufzeichnungsdatenrate (25 Mbps) und zeichnet dabei die Daten in Schrägspuren auf, deren Informationen zuvor in einem Speicher gesammelt worden sind. Bei fast leerem Speicher wird der Aufzeichnungsvorgang unterbrochen, das Laufwerk in den Wiedergabebetrieb gebracht, und mit Hilfe des Bandtransportmotors (invers betrieben) wird in die zuvor gemachte Aufnahme positioniert.

Nähert sich der Speicherinhalt seinem Maximalwert, so wird der Bandvortrieb gestartet, die Spurhaltung herbeigeführt und am Ende der zuvor geschriebenen Spur das Laufwerk in den Schreibzustand umgeschaltet und eine Reihe von neuen Spuren geschrieben, bis der Speicher wieder fast leer ist. Die Daten können später wahlweise mit hoher Datenrate im kontinuierlichen Bandvorschub ausgegeben werden (fast mode) oder wie bei der Aufzeichnung im intermittierenden Betrieb. Hierbei sind zwei Möglichkeiten vorhanden:
Erstens: Die Aufforderung zum Bandtransport erfolgt von der Speichersteuerung und wird somit vom abholenden Zweig, z.B. dem MPEG-Dekoder bestimmt.
Zweitens: Auf dem Band wurden Zeitmarken mit abgelegt, deren Auswertung die Laufwerksoperationen wie bei der Aufzeichnung steuert.

Die Gesamtaufzeichnung besteht aus einer Aneinanderreihung einzelner Kurzaufzeichnungen. Zwischen den Einzelaufzeichnungen werden Laufwerksoperationen ausgeführt, die nur vom Bandantriebsmotor getrieben werden. Die verschiedenen Momente werden von mit dem Bandantrieb kraftschlüssig verbundenen Kupplungen und Bremsen erzeugt.

Die Kurzaufzeichnungen werden jeweils mit maximaler Datenrate durchgeführt. Die maximale Aufzeichnungsdatenrate ist höher als die Eingangsdatenrate. Die Wiedergabedatenrate entspricht der Eingangsdatenrate bei der Aufzeichnung.

Ein Datenspeicher nimmt die Anpassung zwischen Eingangsdatenrate und Aufzeichnungsdatenrate vor und puffert die Laufwerksreaktionszeiten aus. Ein Speicherfüllstandssignal steuert den Aufzeichnungs- und Bandtransportzyklus bei Aufzeichnung und Wiedergabe. Bei der Aufnahme mit aufgezeichneten Zeitreferenzmarken steuern den Bandtransportzyklus bei der Wiedergabe. Der Bandantriebsmotor treibt die Wickelteller an.

Im weiteren werden Ausführungsbeispiele der Weiterbildung beschrieben.

Die Eingangsdatenrate ist konstant 2 Mbps, die Aufzeichnungsdatenrate 25 Mbps. Bei einem Speicher von 64 Mbit Tiefe und einer benötigten Reserve für die 10/90% Füllstandserkennung steht ein Speichervolumen von 51.2 Mbit zur Verfügung, das eine Aufzeichnung für rund 2 s erlaubt. Bei einer Gesamtaufzeichnungsdauer von 4h30m auf einer Kassette bedeutet dies ein rund 8000-maliges Absetzen und Starten des Bandtransportes. Die Ruhezeit des Laufwerkes (Speicherfüllbetrieb) beträgt 25 s, wobei jedoch etwa 1 s für die Vorbereitung der neuen Aufzeichnung abzuziehen ist. Entsprechende Anpassungen an andere Datenraten oder Speichergrößen sind analog zu den gegebenen Zahlenwerten leicht möglich.

Aus den vorgenannten Ausführungen wird ersichtlich, daß pro Kassette häufig die Betriebsart und die Laufrichtung geändert werden muß, um die lange Aufzeichnungsdauer nutzen zu können. Für Consumergeräte sind direktangetriebene Wickeltellersysteme, die von Hause aus geräuscharm umschalten, aus Kostengründen nicht einsetzbar. Mit der neuen Lösung wird bei wesentlich vereinfachter Laufwerkskomplexität die gleiche Funktionalität erreicht. Eine geräuscharme Laufwerksumschaltung ist in den folgenden Abschnitten beschrieben. Der Mechanismus bedient sich dabei des Bandantriebsmotors, um das Band neu zu positionieren.

### Die Aneinanderreihung geschieht folgendermaßen:

Das Laufwerk befindet sich zunächst im Aufnahmebetrieb, d.h. es werden Schrägspuren mit Hilfe einer rotierenden Kopftrommel mit mindestens zwei Köpfen geschrieben, wobei die Spurbreite sich durch das Maß der Bandvorschubgeschwindigkeit ergibt. Bei dieser Betriebsart wird der zuvor mit z.B. 2 Mbps gefüllte Datenspeicher mit z.B. 25 Mbps ausgelesen. Erreicht der Füllstand des Speichers den unteren Schwellwert (z.B. 10%), so wird der Schreibverstärker abgeschaltet und der Bandtransport gestoppt. Während der jetzt einsetzenden Speicherauffüllphase fährt der Bandvorschub ein kleines Stück zurück und stoppt erneut. Erreicht der Füllstand des Speichers den oberen Schwellwert (z.B. 90%), so wird im Wiedergabebetrieb an das Ende des zuvor geschriebenen Bereiches gefahren und beim Erreichen der zuletzt geschriebenen Spur auf Aufnahme umgeschaltet. Es wird eine Vielzahl von neuen Spuren angereiht, bis der Speicher wieder den unteren Füllstandswert erreicht. Die Schreib- und Lesepointer des Speichers sind voneinander entkoppelt. Es kann ein sog. Dual-Port Memory zum Einsatz kommen. Auch eine FIFO ist möglich. Es muß dann sichergestellt sein, daß sich die beiden Pointer nicht "überholen" können.

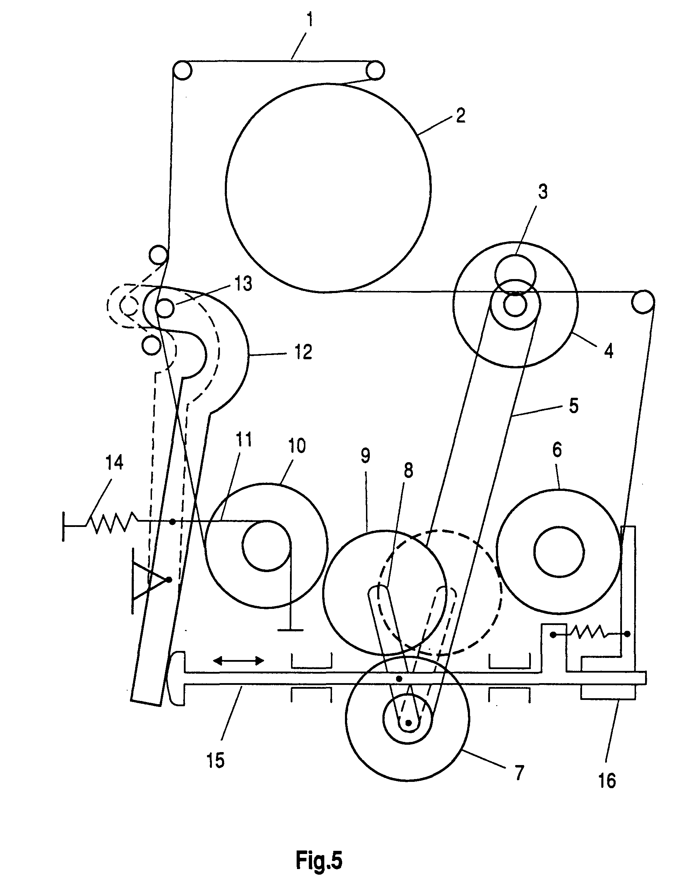

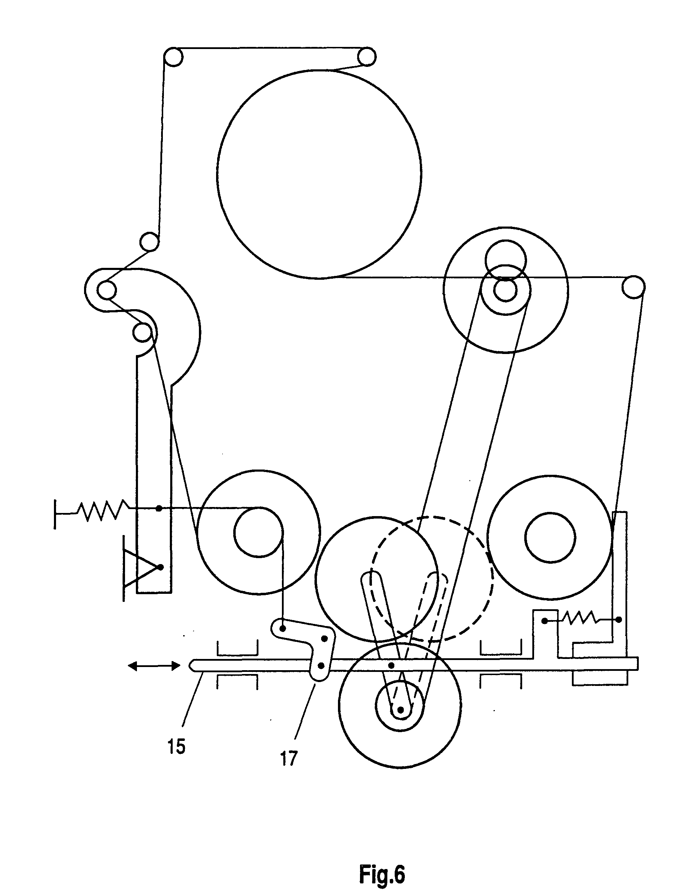

Fig. 5, 6 zeigen die Laufwerkmechanik. Das um die Kopftrommel 2 geschlungene Magnetband 1 wird durch den Bandantriebsmotor 4 und die Andruckrolle 3 über Kraftschluß transportiert. Die Wickeltellerrutschkupplungen rechts 6 bzw. links 10 werden indirekt über Riemen 7,8,9 angetrieben. Je nach Drehrichtung des Bandantriebes schwenkt der Idler im Standardwiedergabebetrieb nach rechts bzw. im Review mode (Inverse Laufrichtung mit geringer Geschwindigkeit) nach links. Über Rutschkupplungen in den Wickeltellern wird der Bandzug der jeweils das Band aufnehmenden Wickelteller erzeugt. Der Rückhaltebandzug wird bei Standardwiedergabe durch eine Bandzugregelung, bestehend aus Bremsband 11, Bremshebel 12, 13 und Bremsfeder 14, erzeugt. Das Bremsband kann einseitig fest eingespannt sein (Fig. 5) oder an einem beweglichen Bremsbandhebel 17 eingehängt sein (Fig. 6).

Der Rückhaltebandzug im Review mode wird durch eine Filzbremse 16 erzeugt. Je nach Bandlaufrichtung müssen die Bandzugregelung 11..14 bzw. die Filzbremse 16 wechselseitig in bzw. außer Funktion gebracht werden. Hierzu wird üblicherweise ein Schieber 15 oder ein entsprechendes Element eingesetzt. Die genannten Elemente finden sich heutzutage in vielen Videorekordern. Sie lassen sich kostengünstig herstellen und haben sich auch bei rauhem Einsatz bewährt.

Daß der Betriebsartwechsel zwischen Normalwiedergabe und Review und die Bewegung des Schiebers 15 durch den Bandtransportmotor bewirkt wird hängt damit zusammen, daß in der Zentralkupplung 7 ein Moment zur Verfügung gestellt wird, so daß dieses Moment an dem Idlerhebel 8 oder von einem nicht dargestellten Zusatzhebel vom Schieber 15 abgenommen werden kann.

Durch diese besonders geräuscharme und dauerlauffeste Art der Bremsansteuerung (Indirect brake Operation) ist es nicht erforderlich, einen weiteren Motor und eine Kurvenscheibe während der Normalwiedergabe- und Reviewumschaltung anzusteuern.

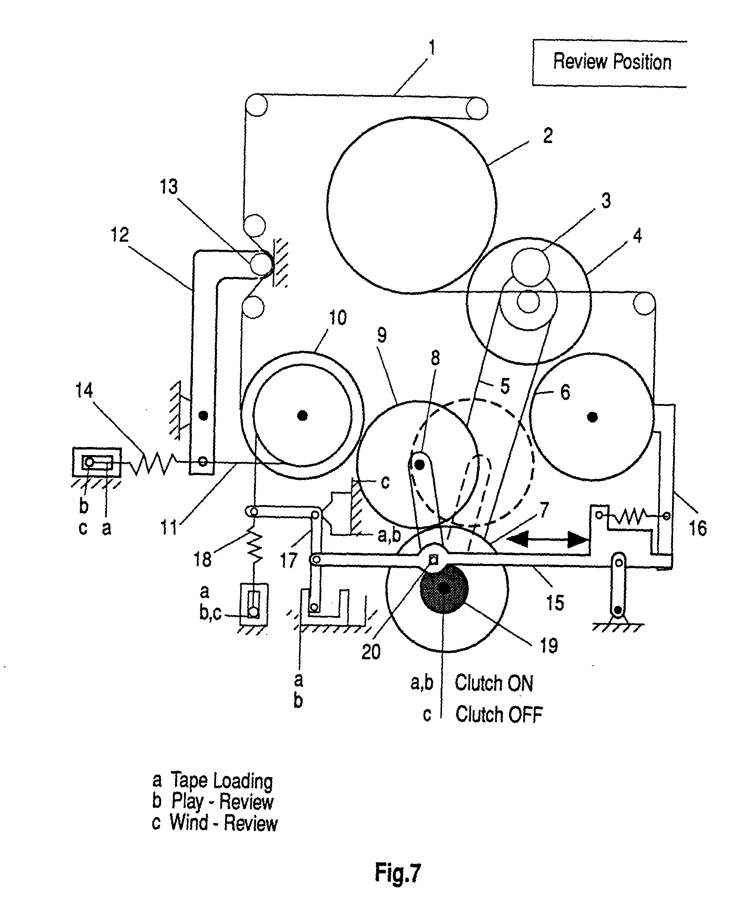

In Fig. 7 ist eine Modifikation der Laufwerke von Fig. 5 und 6 dargestellt, die bis auf die Hauptbremsen für schnelles Umspulen alle weiteren Laufwerkfunktionen beispielhaft angibt.

Weiterhin ist eine Rutschkupplung 19 dargestellt, die ein Moment zur Verfügung stellt, das an dem Stift 20 vom Schieber 15 abgenommen werden kann.

In der Ausführung von Fig. 7 ist eine Zugfeder 18 hinzugefügt worden. Sie wirkt ebenso wie das Bremsband 11 auf den Bremshebel 17. Beide Kräfte sollen sich aufheben und damit den Schieber 15 entlasten. die Rutschkupplung 19 kann entsprechend schwach dimensionert werden, was wiederum den Bandantriebsmotor 4 in der Betriebsart Play-Review entlastet.

Um die horizontale Schaltbewegung von Schieber 15 möglichst leichtgängig zu gestalten, sind durchgängig Drehgelenklager an Pendelstützen vorgesehen.

Die Umschaltung der Laufwerkfunktion, die nicht vom Bandantriebsmotor 4 bewirkt werden, werden zwangsgesteuert. Dazu müssen einige Lagerpunkte beweglich angeordnet sein. Sie können in der Position a, b oder c bewegt werden, was jeweils einem Laufwerksmode entspricht.
a = tape loading, d.h. Magnetband in das Laufwerk ein bzw. ausfädeln
b = Play - Review, das sind alle Mode mit angedrückter Andrucksrolle 3
c= Wind - Rewind , Bandantrieb durch die Wickeltellerrutschkupplung 6, 10, die in dieser Betriebsart überbrückt werden.

### Anwendungsmöglichkeiten:

Allgemein bei Schrägspurmagnetbandaufzeichnungsgeräten für digitale Daten, bei denen die Eingangsdatenrate niedriger ist als die Aufzeichnungsdatenrate. Die Daten raten müssen dabei im Mittel konstant sein, können aber (je nach Speichergröße) in kurzen Zeitinvervallen deutlich abweichen. Aufzeichnungsgeräte für MPEG Datenströme Datenaufzeichnungsanwendungen wie Computerstreamer auf DAT, 8mm sowie DVC Basis.

Bei einer Weiterbildung der Erfindung sind beim Assembleschnitt eines Indirektdrive-Mechadecks (mit Capstan getriebenen Bandwickeln) der Bandzugfühler und die Filzbrems wechselseitig in bzw. außer Eingriff zu bringen. Außerdem muß der Idler zwischen den Wickeltellern schwenken. Diese Funktionen werden für gewöhnlich durch einen schnell drehenden Modemotor bewirkt. Sie sollen nun vom laufruhigen Capstanmotor gesteuert werden. Es wird vorgeschlagen, das die Play-Review-Umschaltung vom Capstanmotor kraftvoll aber doch stromsparend durchgeführt wird, ohne daß er ständig unter einer hohen Zusatzlast steht.

Bei der Weiterbildung der Erfindung wird ein Schieber über einem Federarm durch einen Pin am Idlerrad bewegt, der die Bandzugfühler bzw. die Filzbrems abwechselnd in bzw. außer Eingriff bringt. Der Schieber ist mit eine Zahnstange verbunden, welche über eine Rutschkupplung den Schieber in die Endposition bewegt. Bei Drehrichtungsumkehr bewegt die Rutschkupplung den Schieber mit der Zahnstange langsam in entgegengesetzte Richtung und zwar mindestens so weit, bis der Schieber von dem Pin am Idlerrad wieder übernommen werden kann. Ab hier greift erneut die direkte Kopplung Pin/Federarm für ca. 80% des Rückhubes ein.

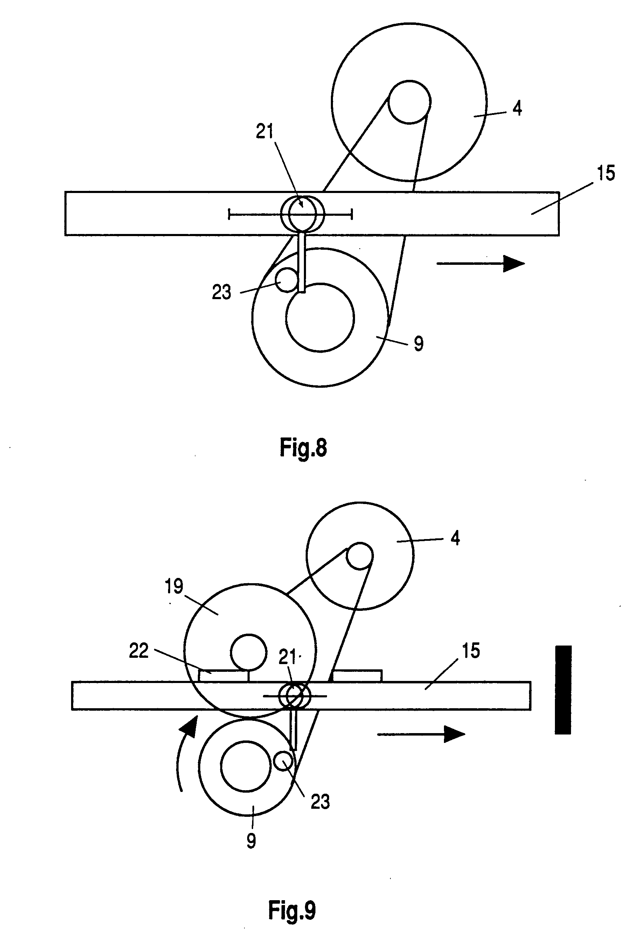

Im folgenden wird die Erfindung anhand der Ausführungsbeispiele Fig. 8 und Fig. 9 erläutert.

Fig. 8 zeigt unter anderem das zu bewegende Element, einen Schieber 15. Er soll den Bandzugfühler (13) bzw. die Filzbrems (16) (nicht dargestellt) abwechselnd in bzw. außer Eingriff bringen. Seine Bewegung startet unmittelbar über das vom Capstan 4 getriebene Idlerrad 9. Der Pin 23 am Idlerrad 9 treibt den Schieber 15 über den Federarm 21 an. Der Pin 23 geht nach ca. 80% der Schieberbewegung außer Eingriff. Fig. 9 zeigt wiederum unter anderem den Schieber 15, welcher mit einer Zahnstange 22 verbunden ist. Die Zahnstange 22 und der Schieber 15 werden durch ein untersetztes Getriebe mit Rutschkupplung 19 übernommen und langsam in Endposition bewegt.

Die Rutschkupplung 19 hält den Schieber 15 in dessen Endstellungen. Bei Drehrichtungsumkehr bewegt die Rutschkupplung 19 den Schieber 15 langsam in entgegengesetzte Richtung und zwar mindestens so weit, bis der Schieber 15 von dem Pin 23 am Idlerrad 9 wieder übernommen werden kann. Ab hier greift erneut die direkte Kopplung Pin/Federarm für ca. 80% des Rückhubes. Der Vorgang kann nun erneut beginnen.

Vorteilhaft ist, daß die ständige Grundlast am Capstan 4 bei Play und Review niedrig ist. Sie entspricht dem untersetzten Kupplungsdrehmoment. Weiterhin, daß der Haupthub der Schieberbewegung kraftvoll und zügig erfolgt und, daß der Federarm mit Überhub die Zahnstange am Schieber sicher in Eingriff mit der Modekupplung bringt. Der Modemotor bleibt bei der Play-Review-Umschaltung in Ruhestellung.

### Anwendungsmöglichkeiten:

Allgemein bei Schrägspurmagnetbandaufzeichnungsgeräten für digitale Daten, bei denen Datenströme in diskontinuierlicher Form vorliegen. Aufzeichnungsgeräte für MPEG Datenströme. Datenaufzeichnungsanwendungen wie Computerstreamer auf DAT, 8mm sowie DVC Basis.

## Patentansprüche

1. Verfahren zur Aufzeichnung eines digitalen Signals auf einem Magnetband, wobei bandparallele Magnetbandsegmente (S1, S2, S3, S4) abwechselnd in einer der beiden Bandlaufrichtungen (Bv) mit einem Schrägspurverfahren aufgezeichnet werden, und eine Gesamtaufzeichnung aus einer Aneinanderreihung einzelner Aufzeichnungen besteht, die jeweils in den Schrägspuren der Magnetbandsegmente enthalten sind, welche Schrägspuren sich in ihrem Spurwinkel, abhängig von der Bandlaufrichtung während der Aufzeichnung, unterscheiden, **dadurch gekennzeichnet,**
**daß** während einer Umschaltung der Bandlaufrichtung aufzuzeichnende Daten in einem Datenspeicher zwischengespeichert werden,
**daß** der Datenspeicher eine Anpassung zwischen Eingangsdatenrate und der höheren Aufzeichnungsdatenrate vornimmt sowie die Laufwerkreaktionszeiten auspuffert, und
**daß** ein Speicherfüllstandssignal einen Aufzeichnungs- und Bandtransportzyklus bei der Aufzeichnung steuert.

2. Verfahren nach Anspruch 1, **dadurch gekennzeichnet, daß** zwischen den einzelnen Aufzeichnungen Laufwerkoperationen durchgeführt werden, die nur von dem Bandantriebsmotor getrieben werden und die verschiedenen Momente von mit dem Bandantrieb kraftschlüssig verbundenen Kupplungen und Bremsen erzeugt werden.

3. Verfahren nach Anspruch 1 oder 2, **dadurch gekennzeichnet, daß** bei der Aufzeichnung der nach dem Umschaltvorgang gefüllte Speicher bis zur nächsten Bandrichtungsumschaltung geleert wird.

4. Recorder zur Aufzeichnung eines digitalen Signales auf einem Magnetband, wobei das Magnetband (1), eine Kopftrommel (2), eine Andruckrolle (3), ein Bandantriebsmotor (4), ein Riemen (5), eine erste Wickeltellerrutschkupplung (6), eine Zentralkupplung (7), ein Idler-Hebel (8), ein Idlerrad (9), eine zweite Wickeltellerrutschkupplung (10), ein Bremsband (11), ein Bremshebel (12), ein Bandzugfühler (13), eine Bremsfeder (14), ein Schieber (15), eine Filzbremse (16), ein Bremsbandhebel (17) und ein Datenspeicher Teile des Recorders sind, wobei Mittel zur Aufzeichnung von bandparallelen Magnetbandsegmenten (S1, S2, S3, S4) abwechselnd in eine der beiden Bandlaufrichtungen mit einem Schrägspurverfahren vorgesehen sind, und eine Gesamtaufzeichnung aus einer Aneinanderreihung einzelner Aufzeichnungen besteht, die jeweils in den Schrägspuren eines Magnetbandsegments enthalten sind, wobei sich die Schrägspuren in ihrem Spurwinkel, abhängig von der Bandlaufrichtung während der Aufzeichnung, unterscheiden, **dadurch gekennzeichnet, daß** ein Datenspeicher vorgesehen ist, der während einer Umschaltung der Bandlaufrichtung (Bv) aufzuzeichnende Daten zwischenspeichert, daß der Datenspeicher eine Anpassung zwischen Eingangsdatenrate und Aufzeichnungsdatenrate vornimmt sowie die Laufwerkreaktionszeiten auspuffert, und daß ein Schieber (15) vorgesehen ist, der über einen Federarm (21) durch einen Pin (23) am Idlerrad (9) bewegt wird, der die Bandzugfühler (13) und die Filzbremse (16) abwechselnd in oder außer Eingriff bringt und mit einer Zahnstange (22) verbunden ist, welche durch eine Rutschkupplung (19) den Schieber (15) in eine Endposition bringt.

## Claims

1. Method for recording a digital signal on a magnetic tape wherein tape-parallel magnettic tape segments (S1, S2, S3, S4) are recorded alternatingly in one of both directions of tape travel (Bv) by means of an helical scan method and a total record consists of a sequence of individual records included within the helical tracks of the magnetic tape said helical tracks differ from each other with respect to their track angle depending from the direction of tape travel during recording
**characterized in that**
data to be recorded during switching over of the direction of tape travel are buffered within a data memory,
said data memory carries out an adaption between input date rate and the higher recording data rate and buffers out the reaction times of the drive mechanism and
that a memory occupancy signal controls a record- and tape transport cyclus during recording.

2. Method according to claim 1, **characterized in that** between the individual recordings, drive operations are carried out which are driven only by the tape drive motor and the various torques are generated by clutches and brakes which are friction-locked to the tape drive.

3. Method according to claim 1 or 2, **characterized in that** during recording the memory filled after the switch-over process is emptied until the next switching-over of direction of the tape.

4. Recorder for recording a digital signal on a magnetic tape wherein the magnetic tape (1), a head drum (2), a pressure roller (3), a tape drive motor (4), a belt (5), a first reel turntable friction clutch (6), a central clutch (7), an idler lever (8), an idler wheel (9), a second reel turntable friction clutch (10), a brake band (11), a brake lever (12), a tape tension sensor (13), a brake spring (14), a slider (15), a felt brake (16), a brake lever (17) and a data memory form parts of the recorder, wherein means for recording tape-parallel magnetic tape segments (S1, S2, S3, S4) are provided alternatingly in one of both tape drive directions together with an helical scan method and a total record consists of a sequence of individual records which are included, respectively, within the helical tracks of one magnetic tape segment, wherein the helical tracks differ with respect to their track angle, dependent from the tape drive direction during recording,
**characterized in that**
a data memory is provided buffering data to be recorded during one switch-over of tape drive direction, that the data memory makes an adaption between input data rate and recording data rate as well as buffers out the drive mechanism reaction times and that a slider (15) is provided which is moved via a spring arm (21) by a pin (23) arranged at the idler wheel (9) which alternatingly brings into and out of engagement the tape tension sensors (13) and the felt brake (16) and which is connected to a rack (22) which moves the slider (15) into an end position by means of a friction clutch (19).

## Revendications

1. Méthode d'enregistrement d'un signal numérique sur une bande magnétique, où des segments de bande magnétique parallèles à la bande (S1, S2, S3, S4) sont enregistrés par un procédé de défilement hélicoïdal, alternativement dans une des deux directions d'entraînement de la bande (Bv), et un enregistrement complet se compose d'une séquence d'enregistrements isolés, qui sont contenus dans les pistes hélicoïdales des segments de bande magnétique, lesquelles pistes hélicoïdales se différencient relativement à leur angle de piste, qui dépend de la direction d'entraînement de la bande pendant l'enregistrement, **caractérisée en ce que**
pendant la permutation de la direction d'entraînement de la bande, les données à enregistrer sont mémorisées temporairement dans une mémoire de données,
la mémoire de données exécute une adaptation entre la vitesse de transmission des données à l'entrée et la vitesse de transmission des données à l'enregistrement plus élevée et assure un effet de mémoire tampon sur les temps de réaction du mécanisme d'entraînement,
un signal d'état de remplissage de la mémoire commande lors de l'enregistrement, un cycle d'enregistrement et de transport de la bande.

2. Méthode selon la revendication 1, **caractérisée en ce que** entre les différents enregistrements, des opérations du mécanisme d'entraînement sont réalisées, qui sont menées uniquement par le moteur d'entraînement de la bande, et les différents moments des systèmes d'accouplement et des freins liés à l'entraînement de la bande par adhérence sont produits.

3. Méthode selon la revendication 1 ou 2, **caractérisée en ce que** lors de l'enregistrement, la mémoire remplie après le processus de permutation, est vidée jusqu'à la prochaine permutation de la direction d'entraînement de la bande.

4. Appareil d'enregistrement d'un signal numérique sur une bande magnétique, où la bande magnétique (1), un tambour de têtes (2), un galet presseur (3), un moteur d'entraînement de la bande (4), une courroie (5), un premier système d'accouplement à friction du plateau d'enroulement (6), un système d'accouplement central 7, un levier de galet fou (8), une roue de galet fou (9), un deuxième système d'accouplement à friction du plateau d'enroulement (10), un ruban de frein (11), un levier de frein (12), un détecteur de tension de bande (13), un ressort du frein (14), un système coulissant (15), un frein de feutre (16), un levier de ruban de frein (17) et un équipement de mémorisation des données font partie de l'appareil d'enregistrement. Dans cet appareil d'enregistrement, des moyens d'enregistrement de segments de bande magnétique parallèles à la bande (S1, S2, S3, S4), par un procédé de défilement hélicoïdal, alternativement dans une des deux directions d'entraînement de la bande, sont prévus, et un enregistrement complet se compose d'une séquence d'enregistrements isolés, chacun compris dans une piste hélicoïdale d'un segment de bande magnétique, lesquelles pistes hélicoïdales se différencient relativement à leur angle de piste, qui dépend de la direction d'entraînement de la bande pendant l'enregistrement, **caractérisé en ce que** un système de mémorisation des données est prévu, système qui mémorise temporairement les données à enregistrer pendant la permutation de la direction d'entraînement de la bande (Bv), **que** la mémoire de données exécute une adaptation entre la vitesse de transmission des données à l'entrée et la vitesse de transmission des données à l'enregistrement et assure un effet de mémoire tampon sur les temps de réaction du mécanisme d'entraînement et **qu'**un système coulissant (15) est prévu, mis en mouvement via un bras de ressort (21), par une broche (23) au niveau de la roue du galet fou (9), et qui met le détecteur de tension de bande (13) et le frein de feutre (16) alternativement en position ou hors position d'intervention, et qui est relié à une crémaillère (22), qui amène, via un système d'accouplement à friction (19), le système coulissant (15) dans une position d'extrémité.
